# EUROPEAN PATENT APPLICATION

(11) **EP 2 062 776 A1**
(43) Date of publication of application: **27.05.2009**
(21) Application number: 08018913.7
(22) Date of filing: 29.10.2008
(51) Int. Cl.: B60Q 3/02, B60Q 1/32, B60Q 1/26

(54) **Illumination device for a vehicle and method of controlling an illumination device**

(30) Priority: 20.11.2007 JP 2007300230; 20.11.2007 JP 2007300232
(71) Applicant: Mazda Motor Corporation, Fuchu-cho Aki-gun Hiroshima 730-8670 (JP)
(72) Inventor: Kusu, Hirotaka, Akig-un Hiroshima 730-8670 (JP); Nagao, Harunori, Akig-un Hiroshima 730-8670 (JP); Niida, Kou, Akig-un Hiroshima 730-8670 (JP); Maruyama, Masahiro, Akig-un Hiroshima 730-8670 (JP); Sagahara, Takayuki, Akig-un Hiroshima 730-8670 (JP); Sannomiya, Masayoshi, Akig-un Hiroshima 730-8670 (JP); Bai, Yubing, Akig-un Hiroshima 730-8670 (JP); Daikokuya, Yoko, Akig-un Hiroshima 730-8670 (JP); Saeki, Kazuhiro, Akig-un Hiroshima 730-8670 (JP); Sato, Yuzou, Akig-un Hiroshima 730-8670 (JP); Katayama, Kazuto, Akig-un Hiroshima 730-8670 (JP)
(74) Representative: Müller-Boré & Partner Patentanwälte

(57) **Abstract**

An illumination device for an ingress-egress opening **(Hs)** of a vehicle and a corresponding method of controlling the illumination device. The illumination device comprises lower illuminators **E1-E5, E8** which are configured to illuminate lower areas **S1-S5, S8** which are located below a beltline **Lb** of the vehicle such that a passenger's upper body is not illuminated, vehicle-inside upper illuminators **E6, E7** which are configured to illuminate an upper-specified area **S6** in the vehicle compartment which is located above the beltline **Lb,** and an illumination controller 80 to control the illuminators **E1-E8.** When the ingress action is detected by the ingressaction detector **83,** the illumination controller 80 prohibits the illuminations of the illuminators **E6, E7** and starts the illuminations of the illuminators **E1-E5, E8.**

## Description

The present invention relates to an illumination device for a vehicle, in particular for a vehicle which is equipped with a slide door, and a method of controlling the illumination device.

A slide door which slides in a longitudinal direction of the vehicle along a side face of a vehicle body is well known as a door of an automotive vehicle or the like. The slide door has been widely used as a rear door for a wagon type or a one-box type of vehicle, for example. In a case in which the slide door is applied to the side portion of a vehicle compartment, a properly-wide ingress-egress opening which is formed at the side portion of the vehicle compartment can be provided, so that the facilities during the passenger's ingress or egress, loading/unloading of baggage and the like can be improved.

Japanese Patent Laid-Open Publication No. 2003-327041 discloses an automotive vehicle equipped with the slide door, in which a light emitter operative to illuminate the surroundings of the slide door is provided at the slide door. Herein, by illuminating a portion below the slide door or a portion behind the slide door when the slide door is open, a pedestrian or a driver of another vehicle which travels beside or behind this automotive vehicle may easily recognize that the slide door is in the open state.

Meanwhile, an illumination device of a vehicle has been recently proposed, in which plural illumination lamps are provided and they are so properly controlled independently or with linkage that various effects to improve feelings of the passenger can be provided (see Japanese Patent Laid-Open Publication No. 2003-327042, for example).

Further, in recent years, the demand for protection of the passenger's privacy to the illumination device of a vehicle has been increased. For example, the protection for the passenger's privacy may be demanded in the event that the passenger gets in the vehicle at a deserted parking lot at night. In particular, in a case in which the passenger is female, elderly or a child, it may be better from the safety viewpoint that it is not recognized that such passenger is getting in. In the vehicle equipped with the slide door, especially, the ingress-egress opening may be easily and clearly viewed from the surroundings of the vehicle outside when the slide door is open, unlike a case in which a hinge type of door is applied to close the ingress-egress opening of the vehicle. Thus, the proper protection of the passenger's privacy may be especially demanded for the vehicle equipped with the slide door.

The conventional illumination devices consider the improvements of the facilities, the safety, or the passenger's feelings during the vehicle ingress, as disclosed in the above-described patent publications. However, the proper protection of the passenger's privacy has not been considered well by the conventional illumination devices.

An object of the present invention is to provide an illumination device of an ingress/egress of a vehicle and a method of controlling such illumination device which can not only improve the facilities during the passenger's ingress or the like but protect the passenger's privacy effectively.

The object is solved by the illumination device for a vehicle and the method according to the independent claims. Preferred embodiments of the present invention are subject of the dependent claims.

According to the present invention, there is provided an illumination device for an ingress-egress opening of a vehicle, particularly for an ingress-egress opening of a slide door, said illumination device comprising:
a plurality of illuminators operative to illuminate specified areas at and around the ingress-egress opening including a lower illuminator which is configured to illuminate a lower area inside and/or outside the vehicle compartment which is preferably located substantially below a beltline of the vehicle such that an upper body of a passenger is not illuminated and a vehicle-inside upper illuminator which is configured to illuminate an upper-specified area (S6) inside the vehicle compartment which is preferably located substantially above the beltline of the vehicle, and
an illumination controller operative to control illumination of the illuminators, said illumination controller being configured to selectively prohibit illumination by the vehicle-inside upper illuminator and start illumination by the lower illuminator.

According to an embodiment of the present invention, there is provided an illumination device of a vehicle which is equipped with a slide door operative to close an ingress-egress opening formed at a side portion of a vehicle compartment and a seat provided near the ingress-egress opening, comprising a plurality of illuminators operative to illuminate specified areas at and around the ingress-egress opening, and an illumination controller operative to control illumination of the illuminators, wherein the illuminators include a lower illuminator which is configured to illuminate a lower area which is located below a beltline of the vehicle such that an upper body of a passenger is not illuminated and a vehicle-inside upper illuminator which is configured to illuminate an upper-specified area in the vehicle compartment which is located above the beltline of the vehicle, and the illumination controller is configured to prohibit illumination by the vehicle-inside upper illuminator and start illumination by the lower illuminator.

According to the present invention, since the illumination by the vehicle-inside upper illuminator is prohibited, a specified area in the vehicle compartment which is positioned above the beltline is not illuminated. Thereby, an upper body of the passenger during the passenger's ingress or the like may not be illuminated, so that the privacy of the passenger can be effectively protected. Further, the illumination by the lower illuminator which is operative to illuminate the lower area located below the beltline of the vehicle such that the upper body of the passenger is not illuminated is started. Thereby, the lower area below the beltline is illuminated during the passenger's ingress or the like, so that the passenger can have a good look at an area around the passenger's step without feeling any inconvenience during the passenger's ingress or the like.

According to an embodiment of the present invention, the illumination device further comprises an ingress-action detector to detect an action of ingress of the passenger through the ingress-egress opening, wherein the illumination controller is configured to prohibit the illumination by the vehicle-inside upper illuminator and start the illumination by the lower illuminator based on detection of the ingress action of the passenger by the ingress-action detector. Thereby, the above-described advantages of the present invention can be achieved, in particular, when the passenger gets in the vehicle.

According to another embodiment of the present invention, the lower illuminator comprises a vehicle-inside lower illuminator which is configured to illuminate a lower-specified area in the vehicle compartment which is located substantially below the beltline, and a vehicle-outside lower illuminator which is configured to illuminate a lower-specified area outside the vehicle which is located substantially below the beltline, and the illumination controller is configured to start illumination by the vehicle-inside lower illuminator after starting illumination by the vehicle-outside lower illuminator based on the detection of the ingress action by the ingress-action detector. Thereby, the illumination of the outside and the illumination of the vehicle by the lower illuminator can be properly executed according to the order of the ingress action of the passenger who is getting in the vehicle, so that an appropriate reception feeling can be provided to the passenger.

According to another embodiment of the present invention, the vehicle-outside lower illuminator comprises a vehicle-surrounding illuminator to illuminate a lower area outside the vehicle near the ingress-egress opening and an outer-handle illuminator to illuminate an outer handle of the slide door, and the vehicle-inside lower illuminator comprises a foot illuminator to illuminate a vehicle floor in front of the seat and an inner-handle illuminator to illuminate an inner handle of the slide door. Thereby, during the passenger's ingress, after the outer handle of the slide door is illuminated by the outer-handle illuminator and the lower area outside the vehicle near the ingress-egress opening is illuminated by the vehicle-surrounding illuminator, the vehicle floor in front of the seat can be illuminated by the foot illuminator and the inner handle of the slide door can be illuminated by the inner-handle illuminator. Accordingly, the passenger can have a good look at the area around the passenger's step, having the appropriate reception feeling. Further, the passenger can have a good look at the operational members (inner and outer handles of the door), so that the facilities during the passenger's ingress can be improved.

According to another embodiment of the present invention, the vehicle-inside lower illuminator comprises a pillar illuminator to illuminate an inside face of a pillar which is provided so as to extend vertically along the ingress-egress opening. Thereby, the passenger can have a good look at the pillar which forms part of the outlines of the ingress-egress opening, so that the ingress action of the passenger can be made smooth.

According to another embodiment of the present invention, the vehicle-inside lower illuminator comprises a seat illuminator to illuminate a seat face of the seat. Thereby, the passenger can have a good look at the seat face of the seat, so that the appropriate reception feeling can be provided to the passenger more properly.

According to another embodiment of the present invention, the illumination device further comprises an ingress-completion detector to detect completion of ingress of the passenger, wherein the illumination controller is configured to start the illumination by the vehicle-inside upper illuminator based on detection of ingress completion by the ingress-completion detector. Thereby, the inside space of the vehicle compartment can be made light after the passenger's ingress is complete. In particular, in a case in which a spot light is applied as the vehicle-inside upper illuminator, its illumination area may be offset properly from the upper body of the passenger. Thereby, the privacy may be effectively protected.

According to another embodiment of the present invention, the plurality of illuminators comprise a plurality of the lower illuminators, and the illumination controller is configured to start the illumination by the plural lower illuminators based on the detection of the ingress action by the ingress-action detector in a specified order and disable the illumination by the plural lower illuminators based on the detection of the ingress completion by the ingress-completion detector in the specified order. Thereby, the appropriate reception feeling of the passenger can be enhanced.

According to another embodiment of the present invention, the illumination device further comprises a vehicle-stop operation detector to detect an operation for a vehicle stop of a driver and an egress-action detector to detect an action of egress of the passenger through the ingress-egress opening, wherein the illumination controller is configured to prohibit the illumination by the vehicle-inside upper illuminator and start the illumination by the lower illuminator based on detection of the vehicle-stop operation by the vehicle-stop operation detector and start the illumination by the vehicle-inside upper illuminator when it is determined that the passenger gets out of an illumination area of the vehicle-inside upper illuminator based on detection of the egress-action by the egress-action detector. Thereby, the upper body of the passenger during the vehicle stop or the passenger's egress may not be illuminated, so that the privacy of the passenger can be effectively protected. Further, the lower area below the beltline is illuminated during the passenger's egress, and the illumination by the upper illuminator is started when it is determined that the passenger has got out of the illumination area. Accordingly, the passenger can have a good look at the area around the passenger's step without feeling any inconvenience during the passenger's egress. Thus, the privacy of the passenger can be effectively protected, ensuring the facilities during the passenger's egress.

According to another embodiment of the present invention, the lower illuminator comprises a vehicle-outside lower illuminator which is configured to illuminate a lower-specified area outside the vehicle which is located substantially below the beltline, and a vehicle-inside lower illuminator which is configured to illuminate a lower-specified area in the vehicle compartment which is located substantially below the beltline, and the illumination controller is configured to start illumination by the vehicle-outside lower illuminator after starting illumination by the vehicle-inside lower illuminator based on the detection of the egress action by the egress-action detector. Thereby, the respective illuminations of the inside and the outside of the vehicle by the lower illuminator can be properly executed according to the order of the egress action of the passenger who is getting off the vehicle, so that the appropriate reception feeling can be provided to the passenger.

According to another embodiment of the present invention, the vehicle-surrounding illuminator is provided at a specified location which is positioned outside and near a lower flange which is located inside and below a projecting portion which projects outward from a side sill extending in a longitudinal direction of the vehicle at an outer end of a vehicle floor, the specified location at which the vehicle-surrounding illuminator is provided being positioned above a lower end of the lower flange. Thereby, the vehicle-surrounding illuminator can be protected against flying stones which may be possibly caused during the vehicle traveling. Since the vehicle-surrounding illuminator is positioned above the lower end of the lower flange, it can be also effectively protected in a case in which the bottom of the vehicle contacts the ground during the vehicle traveling. Further, since the lower flange is located inside and below the projecting portion projecting outward from the side sill, the illumination light which is emitted by the vehicle-surrounding illuminator toward the outside and lower area near the ingress-egress opening is intercepted by the projecting portion. Accordingly, the illumination of the area above the beltline can be prevented surely.

According to another embodiment of the present invention, the lower illuminator is disposed below the beltline. Thereby, the illumination of the passenger's upper body by the lower illuminator can be ensured more easily and surely. In other words, by disposing the lower illuminator below the beltline, the layout flexibility of the lower illuminator can be provided.

According to another embodiment of the present invention, the slide door is a rear door operative to close a rear ingress-egress opening formed at the side portion of the vehicle compartment. Thereby, the appropriate reception feeling can be provided to the passenger for the rear door which may have less illumination than the front door which is located near an instrument panel of the vehicle.

According to another aspect of the invention, there is provided a method of controlling an illumination device for an ingress-egress opening of a vehicle, particularly for an ingress-egress opening of a slide door, said method comprising:
operating a plurality of illuminators to illuminate specified areas at and around the ingress-egress opening including a lower illuminator which is configured to illuminate a lower area inside and/or outside the vehicle compartment and a vehicle-inside upper illuminator which is configured to illuminate an upper-specified area inside the vehicle compartment, and
controlling illumination of the illuminators in such a manner to selectively prohibit illumination by the vehicle-inside upper illuminator and start illumination by the lower illuminator.

Preferably the method further comprises the step of detecting an action of ingress of a passenger through the ingress-egress opening, wherein the illumination by the vehicle-inside upper illuminator is prohibited and the illumination by the lower illuminator is started based on detection of the ingress action of the passenger by an ingress-action detector.

Further preferably, the method comprises the steps of detecting completion of ingress of the passenger, and starting the illumination by the vehicle-inside upper illuminator based on detection of ingress completion by an ingress-completion detector.

Other features, aspects, and advantages of the present invention will become apparent from the following description which refers to the accompanying drawings.
FIG. **1** is a side view schematically showing a side face of an automotive vehicle equipped with an illumination device according to a first embodiment of the present invention.
FIG. **2** is a plan view schematically showing the inside of a vehicle compartment of the automotive vehicle.
FIG. **3** is a sectional view taken along line Y3-Y3 of FIG. **1****,** which schematically shows an attachment structure of a courtesy lamp.
FIG. **4** is a sectional view taken along line Y4-Y4 of FIG. **1****,** which schematically shows an attachment structure of an outer-handle lamp.
FIG. **5** is a side view of a portion below a second seat which schematically shows an attachment structure of a foot lamp.
FIG. **6** is a perspective view of the portion below the second seat which schematically shows the attachment structure of the foot lamp, when seen from the front.
FIG. **7** is a perspective view of a center pillar and its surroundings which schematically shows a structure of a pillar intensive illumination portion, when viewed from the rear.
FIG. **8** is an enlarged perspective view showing a major portion of FIG. **7****.**
FIG. **9** is an enlarged perspective view showing a major portion of a modification of the pillar intensive illumination portion of FIG. **8****.**
FIG. **10** is an enlarged side view of the automotive vehicle which schematically shows an attachment structure of a console-down-light lamp and a room lamp.
FIG. **11** is a block diagram schematically showing a structure of an illumination system of the automotive vehicle.
FIG. **12** is a flowchart of an example of a control of an illumination system.
FIG. **13** is a flowchart of another example of the control of the illumination system according to a second embodiment of the present invention.

Hereinafter, preferred embodiments of the present invention will be described referring to the accompanying drawings. Although the two embodiments are described separately, it is clear to the skilled person that single feature(s) of the one embodiment may be combined with single feature(s) or all features of the other embodiment so as to receive further embodiments.

### EMBODIMENT 1

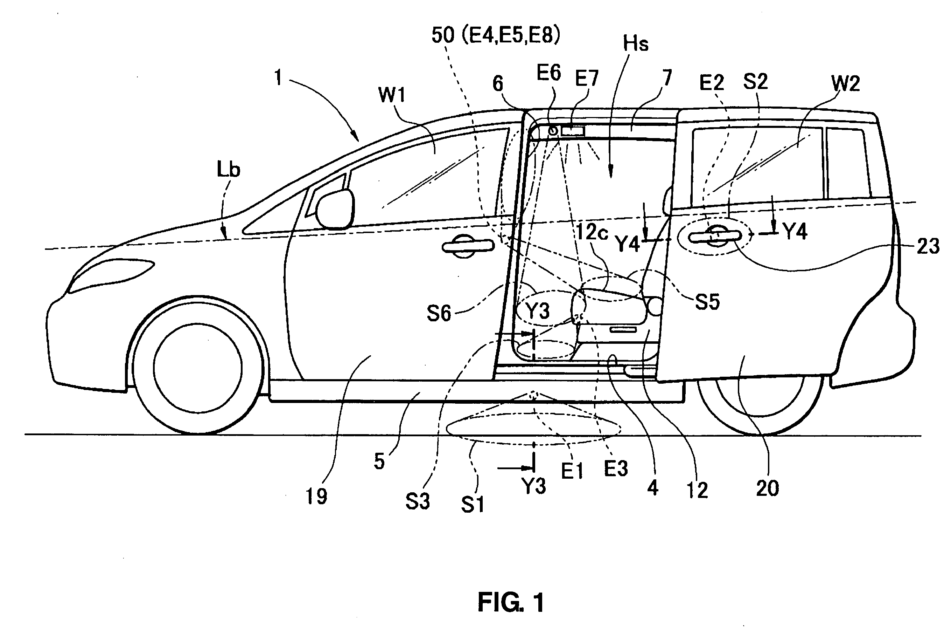

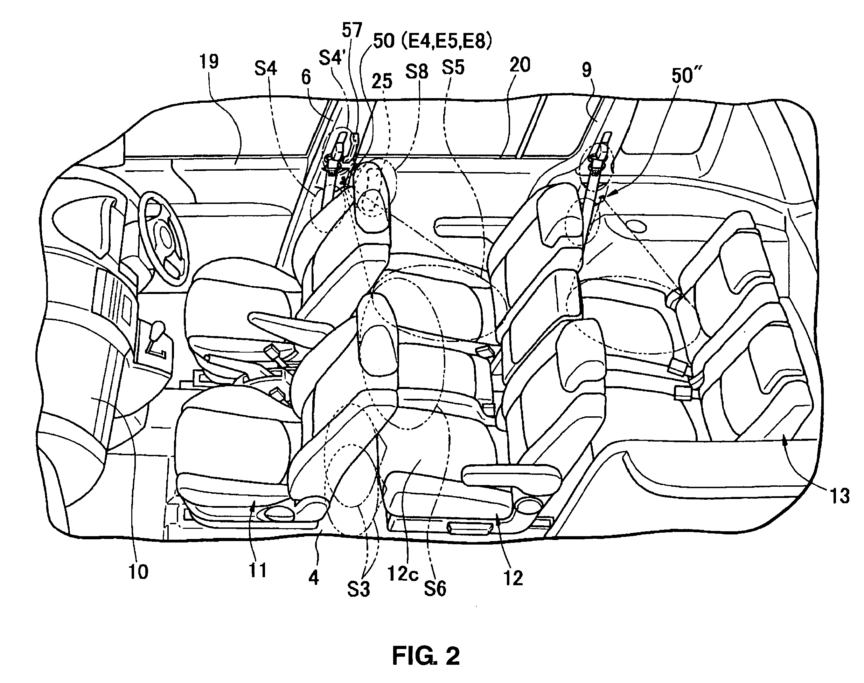

FIG. **1** is a side view schematically showing a side face of an automotive vehicle equipped with an illumination device according to a first embodiment of the present invention. FIG. **2** is a plan view schematically showing the inside of a vehicle compartment of the automotive vehicle. As shown in these figures, an automotive vehicle **1** according to the present embodiment is a so-called wagon type of vehicle, and three row seats of a front (foremost row) seat **11**, a second (second row) seat **12** and a rear (rearmost row) seat **13** are disposed in a vehicle compartment. At a side face of a rear portion of the vehicle compartment is provided a so-called slide door **20** which slides in a longitudinal direction along the side face of the vehicle as a door for the rear seat (the second seat **12** and the rear seat **13**). The slide door **20** is operative to close an ingress-egress opening **Hs** which is formed at the side face of the vehicle compartment. Herein, a side end portion of the second seat **12** is located near an ingress-egress opening **Hs** which is opened by the rearward move of the slide door **20**. Although this embodiment is described for the case of an application of the illumination device for a wagon type vehicle having a slide door, it is not limited to this type of vehicle and may also be applied to any other type of vehicle.

The automotive vehicle **1** is equipped with an illumination device having some illumination lamps to illuminate specified areas inside and outside the vehicle compartment, including surroundings of the ingress-egress opening **Hs** and door knobs. Hereinafter, the illumination lamps of the illumination device will be described.

The illumination lamps comprise a lower illumination lamp which is configured to illuminate a lower area which is located below a beltline **Lb** of the vehicle such that an upper body of a passenger is not illuminated and a vehicle-inside upper illumination lamp which is configured to illuminate an upper-specified area in the vehicle compartment which is located above the beltline **Lb** of the vehicle. The lower illumination lamp comprises a vehicle-outside lower illumination lamp which is configured to illuminate a lower-specified area outside the vehicle which is located below the beltline Lb, and a vehicle-inside lower illumination lamp which is configured to illuminate a lower-specified area in the vehicle compartment which is located below the beltline **Lb.**

The beltline **Lb** is an imaginary line which is located right below the lower sides of window portions **W1, W2** at the vehicle side portion so as to extend in the vehicle longitudinal direction along the lower sides of the window portions **W1, W2,** which may be also referred to as a waist line. Generally, the illumination is restricted so as to be directed toward the lower area below the beltline **Lb**, so that the upper body of the passenger may not be illuminated.

A courtesy lamp **E1** is a lamp of a vehicle-surrounding illumination which is operative to illuminate a lower area **S1** outside the vehicle near the ingress-egress opening **Hs**, which is a kind of the above-described vehicle-outside lower illumination lamp. The courtesy lamp **E1** is attached to the outside of a lower-end flange of a side sill **5** which is provided at a side-end portion of a vehicle floor **4** so as to extend longitudinally, which will be described in detail later.

An outer-handle lamp **E2** is a lamp, a kind of the above-described vehicle-outside lower illumination lamp, which illuminates an outer handle **23** of the slide door **20** and its adjacent area **S2**. The outer handle lamp **E2** is attached to the back face of the outer handle, which will be descried in detail later, so that the outer handle **23** itself can be illuminated with a so-called indirect illumination.

A foot lamp **E3** is a lamp, a kind of the above-described vehicle-inside lower illumination lamp, which illuminates a specified area **S3** on the vehicle floor **4** in front of a seat, e.g. the second seat **12** (a foot area of the second seat **12)** of the wagon type vehicle. The foot lamp E3 is preferably attached to a slide lever which is located at a lower front portion of a seat cushion **12c** of the second seat **12,** which will be descried in detail later.

A center-pillar lamp **E4** is a lamp, a kind of the above-described vehicle-inside lower illumination lamp, which is located beside the front seat **11** and in front of the second seat **12** (a seat or seat row behind a front seat) and illuminates an inside-face area **S4** of a center pillar **6** (so-called B pillar) which is provided so as to extend substantially vertically along a front edge of the ingress-egress opening **Hs** so that the position of the center pillar can be easily recognized by the passenger. The center-pillar lamp **E4** is disposed at a pillar intensive illumination portion **50** which is provided in an interior trim of the center pillar **6**, which will be descried in detail later.

A seat-down-light lamp **E5** is a lamp, a kind of the above-described vehicle-inside lower illumination lamp, which illuminates a seat face area **S5** of the seat cushion **12c** of the second seat **12** so that the position of the seat can be easily recognized by the passenger. The seat-down light lamp **E5** is also disposed at the pillar intensive illumination portion **50**, which will be descried in detail later.

A console-down-light lamp **E6**, which is a lamp for illuminating the hand portion of the passenger seated in the second seat **12**, illuminates a center area **S6** before the second seat **12**. The console-down-light lamp **E6** is a so-called spot light which has a high directionality, and its illumination direction is so adjustable that the hand portion of the passenger can be illuminated properly. The console-down-light lamp **E6**, a kind of the above-described vehicle-inside upper illumination lamp, is preferably attached to a vehicle ceiling **7** as described in detail later.

A room lamp **E7** is also a kind of the above-described vehicle-inside upper illumination lamp and attached to the center of the vehicle ceiling **7** and illuminates the inside of the vehicle compartment widely, which will be described in detail later.

An inner-handle lamp **E8** is a lamp, a kind of the above-described vehicle-inside lower illumination lamp, which illuminates an area **S8** of an inner handle **25** of the slide door **20** and its surroundings when the slide door **20** is closed so that the position of the inner handle **25** seat can be easily recognized by the passenger. The inner-handle lamp **E8** is also disposed at the pillar intensive illumination portion **50** as descried in detail later.

Herein, the slide door **20** is a rear door operative to close the rear ingressegress opening **Hs** at the side portion of the vehicle compartment, and it has less illumination than a front door **19** which is located near an instrument panel **10** of the vehicle (see FIG. **2**).

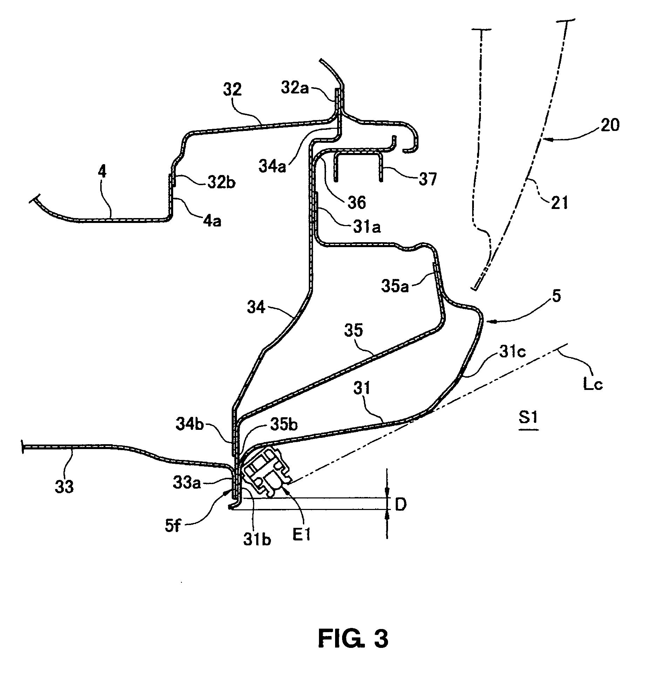

FIG. **3** is a sectional view taken along line Y3-Y3 of FIG. **1**, which schematically shows the attachment structure of the courtesy lamp **E1.** As shown in this figure, the side sill **5** comprises an outer panel **31** which forms its outer face, an inner panel **32** which forms an upper portion of a projecting portion projecting inward, and an under panel **33** which forms a lower portion of the projecting portion. The outer panel **31** is configured such that its lower portion projects outward, and a reinforcement (second reinforcement) **35** is provided on the inside of the above-described outward-projecting portion **31 c**. A first reinforcement **34** is further disposed on the inside of the second reinforcement **35**. An upper end portion **35a** of the second reinforcement **35** is fixed to the inner face of the outer panel **31**, and its lower end portion **35b** is fixed to the inner face of a lower-end vertical wall **31** b of the outer panel **31**. An upper end portion **34a** of the first reinforcement **34** is fixed to the outer face of an outside vertical wall **32a** of the inner panel **32,** and its lower end portion **34b** is fixed to the inner face of a lower portion of the second reinforcement **35**.

An inside vertical wall **32b** of the inner panel **32** is fixed to an outside end portion **4a** of the floor panel **4.** A lower end of a rail holding panel **36** with a cross section having a reverse-L shape is joined to an upper-end vertical wall **31** a of the upper panel **31**. A rail **37** for guiding the slide rail **20** (only its outer panel **21** is illustrated in FIG. **3**) is attached to the lower face of the upper portion of the rail holding panel **36**. The under panel **33** has a vertical wall **33a** which bends downward at its outside end portion. The outside vertical wall **33a** of the under panel **33**, the lower end portion **35b** of the second reinforcement **35**, and the lower-end vertical wall **31b** of the outer panel **31** are joined together, thereby forming a lower flange **5f** which has a specified length at the lower end portion of the side sill **5**.

The courtesy lamp **E1** is attached to the outside of the lower flange **5f**. Its attachment position is a specified distance **D** above the lower end of the flange **5f.** Accordingly, the courtesy lamp **E1** can be protected by the lower flange 5f against flying stones which may be possibly caused during the vehicle traveling. Further, since the courtesy lamp **E1** is positioned above the lower end of the lower flange 5f (by the specified distance **D**), it can be also effectively protected in a case in which the bottom of the vehicle contacts the ground during the vehicle traveling. Further, since the lower flange **5f** is located inside and below the projecting portion **31c** which projects outward from the side sill **5,** the illumination light which is emitted by the courtesy lamp **E1** toward the outside and lower area **S1** near the ingress-egress opening **Hs** is intercepted by the projecting portion **31c** in such a manner that an upper limit of its illumination scope (see an upper limit line **Lc**) is restricted. Accordingly, the illumination of the area above the beltline **Lb** can be prevented surely.

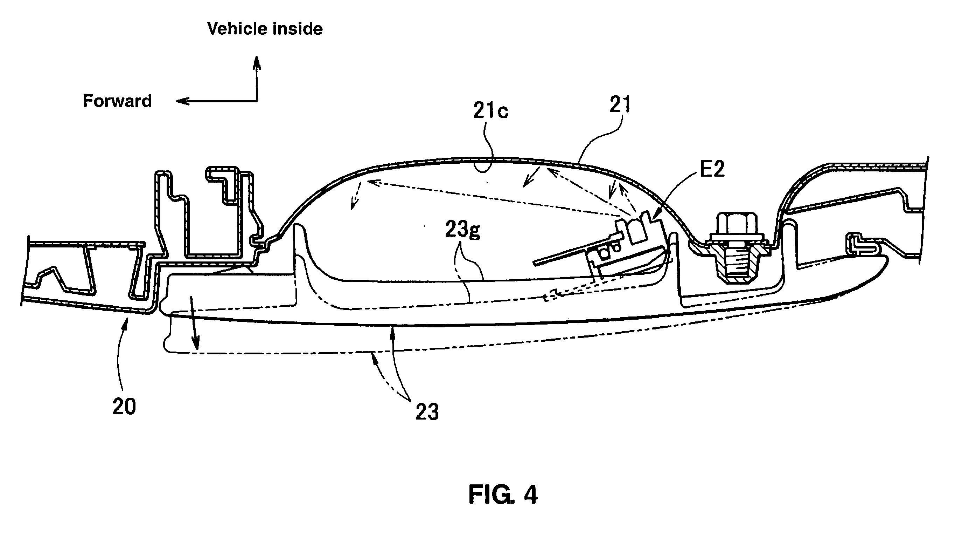

FIG. **4** is a sectional view taken along line Y4-Y4 of FIG. **1**, which schematically shows an attachment structure of the outer-handle lamp **E2.** As shown in this figure, at the door outer panel **21** of the slide door **20** is formed a recess **21c** which is provided so as to correspond to a grip portion **23g.** Pulling the outer handle **23** with holding the grip portion **23g** causes a specified-angle outward rotation of the outer handle **23** (see indication with a two-dotted broken line in FIG. **4**), thereby opening the slide door **20**.

The outer handle lamp **E2** is attached to one end portion (rear end portion in the present embodiment) of the back face side of the grip portion **23g** of the outer handle **23**. The outer handle lamp **E2** is located properly in a space between the inner face of the grip portion **23g** and the surface of the recess **21c** of the door outer panel **21** even in a case in which the outer handle is in a non-operational state (see indication with a solid line in FIG. **4**). The illumination light of the outer handle lamp **E2** is emitted inward so as to reflect on the surface of the recess **21c** of the door outer panel **21**. The outer handle **23** is illuminated by this reflection light. Namely, the outer handle **23** itself can be illuminated with a so-called indirect illumination.

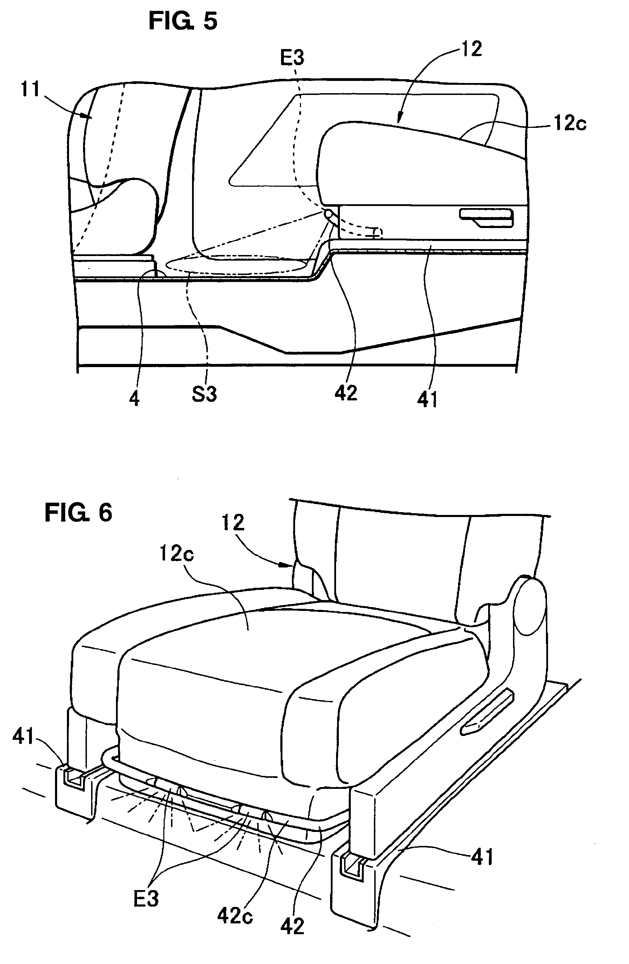

FIGS. **5** and **6** show schematically an attachment structure of the foot lamp **E3**. FIG. **5** is a side view of a portion below the second seat, and FIG. **6** is a perspective view of the portion below the second seat. As shown in these figures, a slide mechanism **41** for the second seat **12** is provided below the seat cushion **12c** of the second seat **12**. The slide mechanism **41** is equipped with a slide lever **42** for lock-unlock operations of the longitudinal slide of the second seat **12.**

The slide lever **42** has a substantially-U shape in the plan view, and its central straight portion **42c** is located below and in front of the front end of the seat cushion **2c**. The foot lamp **E3** is attached to the front face of the straight portion 4**2c** of the slide lever **42**, preferably in such a manner that they are buried at two portions of that. The foot lamp **E3** illuminates a front area (foot area) S3 of the vehicle floor **4** in front of the second seat **12.**

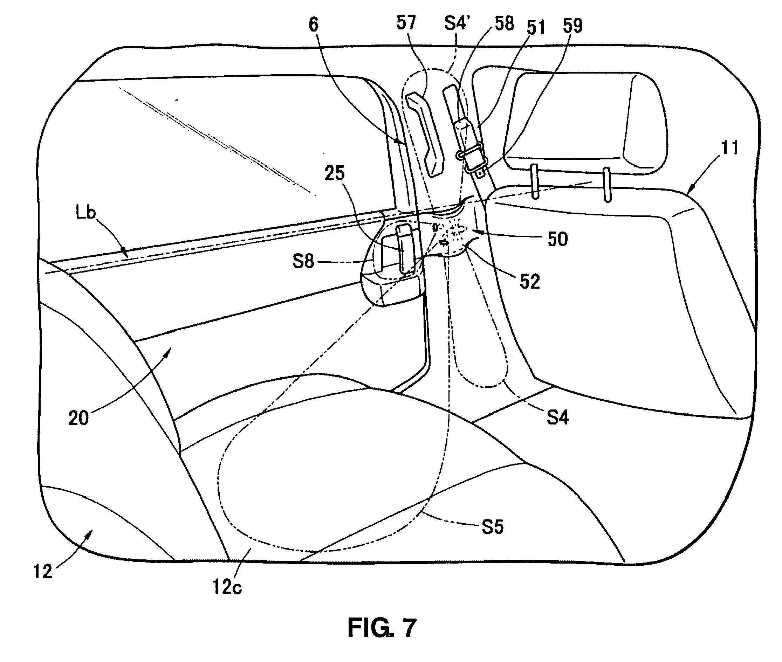

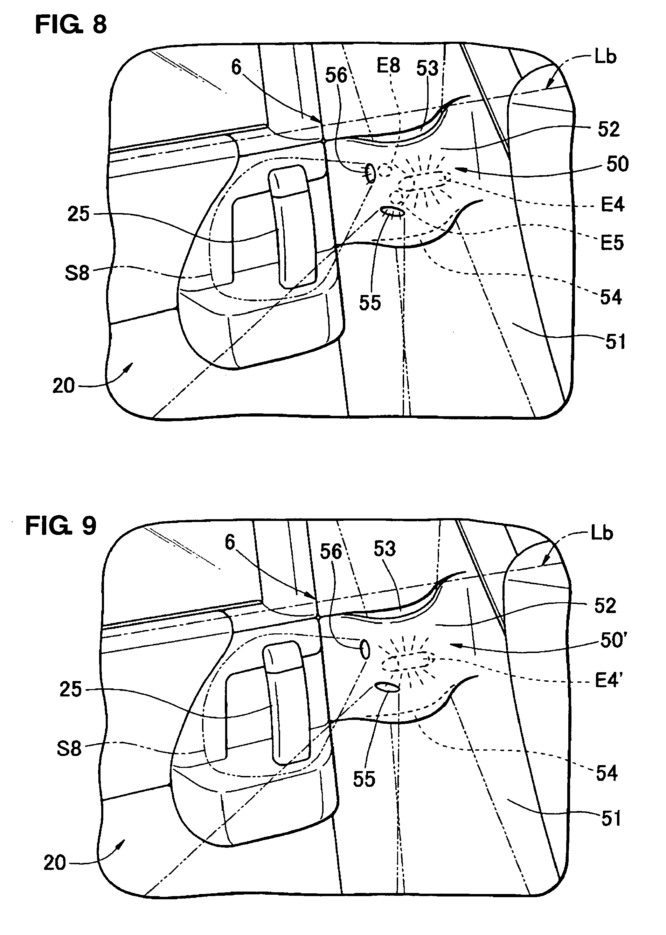

FIGS. **7** and **8** show schematically the structure of the pillar intensive illumination portion. FIG. **7** is a perspective view of the center pillar and its surroundings, and FIG. **8** is an enlarged perspective view showing a major portion of FIG. **7****.** As shown in these figures, the center pillar **6** is covered with an interior member **51** (pillar trim), which is made of resin, from the inside of the vehicle compartment. Between the pillar trim **51** and the center pillar **6** is formed a space (trim space). The center-pillar lamp **E4**, seat-down-light lamp **E5** and inner-handle lamp **E8** are disposed in this trim space. The lamps **E4, E5** and **E8** constitute an emitter of the pillar intensive illumination portion **50**, which are disposed below the beltline **Lb.**

The pillar trim **51** is configured such that its specified portion which corresponds to the pillar intensive illumination portion **50** projects inward slightly and its projecting portion **52** has slits **53, 54** having a specified width at its upper portion above the projecting portion **52** and its lower portion below the projecting portion **52**. The center-pillar lamp **E4** is located at a central portion between the upper and lower slits **53, 54** so as to illuminate an upper area **S4**' and a lower area **S4** of the pillar trim **51** through the slits **53, 54.**

An assist grip **57** which may be used during the ingress or egress of the vehicle is provided above the projecting portion **52**. The illumination light through the upper slit **53** is directed to the assist grip **57**. Further, this illumination light illuminates a seatbelt anchor **58** of the front seat **11** and a seatbelt tongue **59** in a stored position. The illumination light through the upper slit **53,** which is directed upward of the beltline **Lb**, illuminates the upper area **S4**' along the pillar trim, and does not illuminate the upper body of the passenger.

Meanwhile, the illumination light through the lower slit **54**, which illuminates the lower area **S4** of the pillar trim **51**, illuminates the inside of the center pillar **6** which extends vertically along the ingress-egress opening **Hs** and constitutes part of the contour of the ingress-egress opening Hs. Thereby, the visibility is so improved that the easy and smooth ingress or egress action of the passenger can be provided. Also, the illumination light through the upper slit **53** performs the similar function for the upper area **S4**' of the pillar trim **51**.

Further, a lower opening **55** is formed at a rear and lower portion of the projecting portion **52,** and the seat-down-light lamp **E5** is disposed obliquely above the lower opening **55** in the trim space. The illumination light from the seat-down-light lamp **E5**, which is directed obliquely rearward and downward through the lower opening **55**, is directed to the seat-face area **S5** of the seat cushion **12c** of the second seat **12.** Thereby, the passenger can have a good look at the seat so as to recognize the seat's position well.

Also, an upper opening **56** is formed at a rear and upper portion of the projecting portion **52**, and the inner-handle lamp **E8** is disposed beside the upper opening **56** in the trim space. The illumination light of the inner-handle lamp **E8** is emitted rearward and substantially horizontally through the upper opening **56**. The inner handle **25** for the slide door **20** is located right behind the projecting portion **52** of the pillar trim **51**. The illumination light from the inner-handle lamp **E8** is directed to the inner handle **25**. By illuminating the inner handle **25** and its adjacent area **S8** in the closed position of the slide door **20**, the passenger can have a good look at the inner handle **25** so as to recognize its position well.

FIG. **9** is an enlarged perspective view showing a major portion of a modification of the pillar intensive illumination portion of FIG. **8****.**

According to this modification, a single light source E4' is disposed in the trim space, and the light resource **E4**' emits the illumination light through the slits **53, 54** and the openings **55, 56**. The position relationship of the slits **53, 54** and openings **55, 56** relative to the light source **E4'** may be properly set according to the desired illumination direction. In this case, the efficient illumination can be conducted with the single light source **E4'**. Further, the structure of the pillar intensive illumination portion **50** can be simplified. The light source **E4** for the center pillar, for example, may be used as this light source **E4**'.

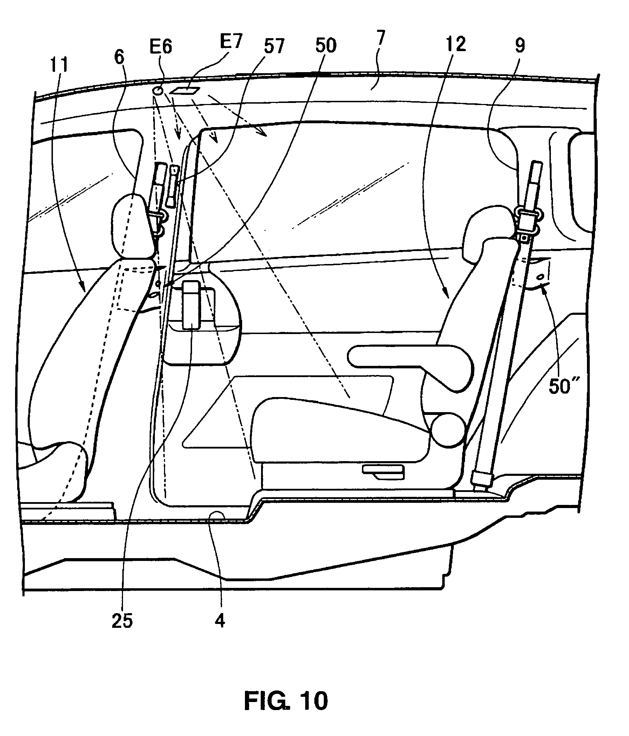

Herein, the above-described slits **53, 54** and openings **55, 56** may be covered with a transparent member or a semitransparent member, such as a glass. In this case, dusts and the like can be properly prevented from coming into the trim space, and the light sources **E4, E5, E8** and **E4'** inside can be properly protected. Further, a pillar intensive illumination portion 50" may be provided at a rear pillar **9** (so-called C pillar: see FIGS. **2** and **10**) which is provided so as to extend vertically along the rear edge of the ingress-egress opening **Hs** as well as the above-described pillar intensive illumination portion **50, 50**' at the center pillar **6.** In this case, it may be unnecessary to provide the inner-handle lamp **E8** and the upper opening **56** of the pillar trim **51** at the rear pillar **9**.

As apparent from the above description, each of the courtesy lamp **E1,** outer-handle lamp **E2,** foot lamp **E3**, center-pillar lamp **E4**, seat-down-light lamp **E5** and inner-handle lamp **E8**, which is the lower illuminator operative to illuminate the lower area below the beltline **Lb** of the vehicle such that the upper body of the passenger is not illuminated, is located below the beltline **Lb**. Thus, the function of the lower illumination lamps **E1-E5, E8** not illuminating the upper body of the passenger can be achieved easily and surely. In other words, by disposing the lower illumination lamps **E1-E5, E8** below the beltline **Lb**, a properly flexible layout of these lamps in this disposition area below the beltline **Lb** can be provided.

FIG. **10** is an enlarged side view of the automotive vehicle which schematically shows an attachment structure of the console-down-light lamp **E6** and the room lamp **E7.** The console-down-light lamp **E6**, which illuminates the hand portion of the passenger seated in the second seat **12,** is disposed at the central portion of the vehicle sealing **7,** which corresponds to the center pillar 6 in the longitudinal direction. The console-down-light lamp **E6** illuminates the center area S6 (see FIGS. **1** and **2**) in front of the second seat **12**. This lamp **E6** is the spot light having the high directionality as described above, and its illumination direction is so adjustable that the passenger seated in the second seat **12** can have a good look at the hand portion. The room lamp **E7** is attached to the central portion of the vehicle sealing **7** which is slightly in back of the console-down-light lamp **E6** so as to illuminate the vehicle compartment widely.

Hereinafter, an illumination system of the automotive vehicle **1** will be described.

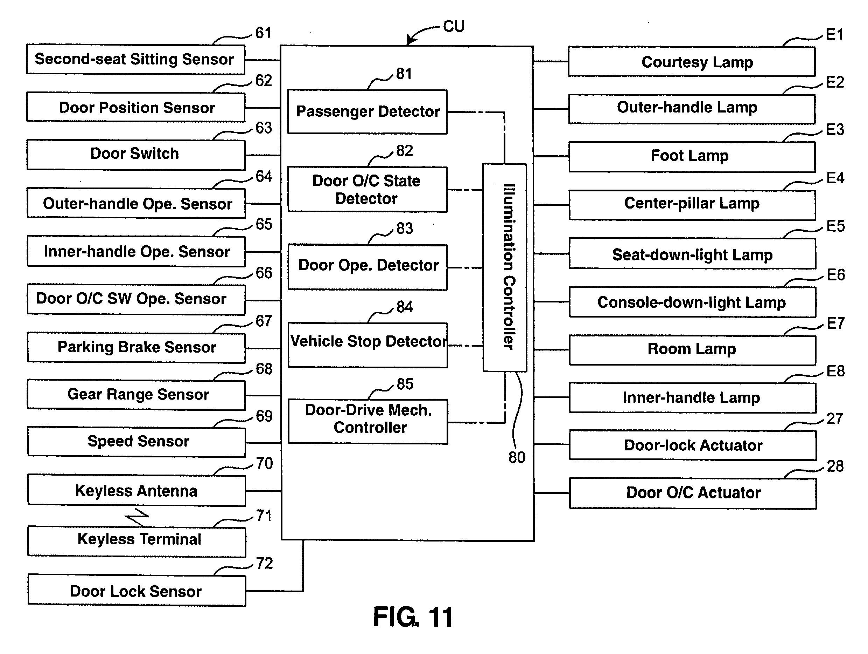

FIG. **11** is a block diagram schematically showing a structure of the illumination system according to the present embodiment. As shown in this figure, the automotive vehicle **1** comprises a control unit **CU**, which is a microcomputer, for example, as a controller device to control the illumination system. The above-described lamps **E1-E8** are coupled to the control unit **CU**. The following devices and sensors in addition to the lamps **E1-E8** are coupled to the control unit **CU.**

A door-lock actuator **27**, which is an actuator operative to automatically conduct lock/unlock operations of the slide door **20**, is driven by an operation of a keyless terminal **71** or a switching operation of a door switch **63**, which will be described later, before or after the opening/closing operation of the slide door **20.** A door-opening/closing actuator **28,** which is an actuator operative to automatically open or close the slide door **20,** is driven by the operation of the keyless terminal **71** or a switching operation of a door opening/closing switch (not illustrated).

A second-seat sitting sensor **61** is a sensor to detect existence of the passenger seated in the second seat **12**. A door position sensor **62** is a sensor to detect the opening state of the slide door **12** by its position and opening angle. The door switch **63** is a switch to control ON/OFF operations of the door lock actuator **27** so as to automatically operate lock/unlock of the door lock of the slide door **20**. An outer-handle operation sensor **64** and an inner-handle operation sensor **65** are sensors to detect respective manual operations of the outer handle **23** and the inner handle **25** of the slide door **20**.

A door-opening/closing-switch operation sensor **66** is a sensor to detect the operation of the door opening-closing switch (not illustrated) operative to drive the door-opening/closing actuator **28** so as to automatically open or close the slide door **20** without the manual operation of the outer handle **23** or the inner handle **25.** The door opening-closing switch is provided at a remote controller which is detachably installed to a driver seat or its near portion.

A parking-brake sensor **67** is a sensor to detect the operation of a parking brake (not illustrated), and a gear-range sensor **68** is a sensor to detect the gear range of a transmission. A speed sensor **69** is a sensor to detect a vehicle speed of the automotive vehicle **1**. It can be detected whether the vehicle is in a stop state or not according to detection results of the parking-brake sensor **67,** gear-range sensor **68** and speed sensor **69.**

A keyless antenna **70**, which is an antenna to receive a control signal from the keyless terminal **71** of a so-called keyless entry system, drives the door-lock actuator **27** and the door-opening/closing actuator **28** according to the operation of the keyless terminal **71**. When the slide door **20** is opened or closed automatically, this door operation can be detected by the receiving signal of the keyless antenna **70.**

A door lock sensor **72** is a sensor to detect whether the slide door **20** is locked or unlocked.

The control unit **CU** comprises various detectors (detecting circuits) related to the controls of the illumination system.

A passenger detector **81**, which is disposed near the ingress-egress opening **Hs,** detects the passenger seated in the second seat **12** based on the input signal from the second-seat sitting sensor **61.**

A door-opening/closing state detector **82** detects opening/closing states of the slide door **20** based on the input signal from the door position sensor **62**. The door-opening/closing state detector **82** (which corresponds to an ingress-completion detector of the present invention) detects completion of ingress of the passenger by detecting that the slide door **20** is closed after the ingress action of the passenger has been detected by a door operation detector 83 which will be described below.

The door operation detector **83** detects the operation of lock or unlock of the slide door **20** or the operation of opening or closing of the slide door **20** based on the input signals from the door switch **63**, outer-handle operation sensor **64,** inner-handle operation sensor **65**, door-opening/closing-switch operation sensor **66**, keyless antenna **70,** and door lock sensor **72**. The door operation detector **83** (which corresponds to an ingress-action detector of the present invention) detects the ingress action of the passenger through the ingress-egress opening **Hs** by detecting the unlock operation of the slide door **20** from the outside and the operation of the outer handle **23** after this door unlock.

A vehicle stop detector **84** detects a vehicle stop based on the input signals from the parking brake sensor **67,** gear range sensor **68** and speed sensor **69.**

The control unit **CU** comprises, in addition to the above-described detectors **81-84**, a door-drive mechanism controller **85** which drives the door-lock actuator **27** and the door-opening/closing actuator **28** based on the input signals from the door-opening/closing-switch operation sensor **66** and the keyless antenna **70** for the automatic opening/closing operation of the slide door **20.** The door-drive mechanism controller **85** and the detectors **81-84** are coupled to the illumination controller **80**, which controls the lamps **E1-E8** based on the input signals from the door-drive mechanism controller **85** and the detectors **81-84.**

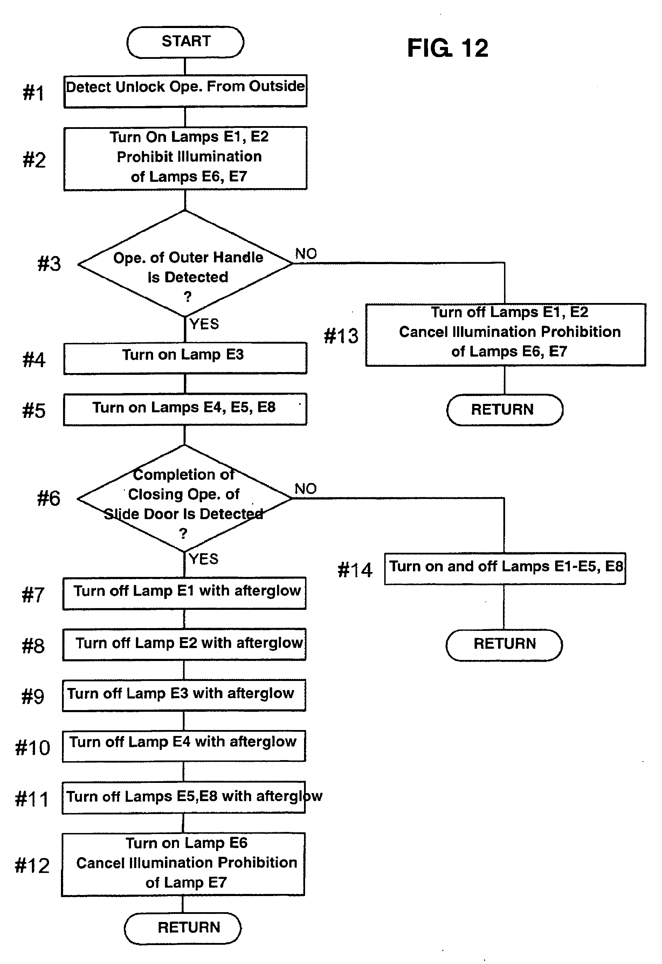

An example of the control of the above-described illumination system will be described referring to a flowchart of FIG. **12****.** This is an example of the control which is executed by the illumination controller **80** when the slide door is opened manually by the passenger.

As shown in FIG. **12****,** when the unlock operation of the door from the vehicle outside is detected by the door operation detector **83** in step **#1**, controls in the following steps of and after step **#2** are executed. Herein, the unlock operation from the vehicle outside includes an unlock operation by the keyless terminal **71** and an unlock operation by a key inserting in a key cylinder of the door (a driver's seat door).

In the step **#2,** the illumination of the courtesy lamp **E1** and the outer-handle lamp **E2** is started, while the illumination of the console-down-light lamp **E6** and the room lamp **E7** is prohibited. According to these processing, the passenger can have a good look at the foot of the passenger getting in with the illumination of the courtesy lamp **E1,** and have a good look at the outer handle with the outer-handle lamp **E2**. Further, the illuminations of the console-down-light lamp **E6** and the room lamp **E7** are prohibited, so that the upper body of the passenger can be surely prevented from being illuminated, thereby protecting the privacy of the passenger properly.

In step **#3**, it is determined whether or not the operation of the outer handle **23** of the slide door **20** is detected by the door operation detector **83** within a specified time. This processing is executed in order to determine whether or not the passenger gets in to the second seat **12** or the rear seat **13** after the door unlock. When the operation of the outer handle **23** is detected in the step **#3**, it is determined that the passenger gets in to the second seat **12** or the rear seat **13,** and then the control proceeds to step **#4**. When the operation of the outer handle **23** of the slide door **20** is not detected within the specified time in the step **#3,** it is determined that the passenger does not get in to the second seat **12** or the rear seat **13**, and then the control proceeds to step **#13.** In the step **#13,** the courtesy lamp E1 and the outer-handle lamp **E2** are turned off, and the illumination prohibition of the console-down-light lamp **E6** and the room lamp **E7** is cancelled and the control returns to the normal control.

The illumination of the foot lamp **E3** is started in the step **#4.** Thereby, the foot area **S3** of the second seat **12** is illuminated by the foot lamp **E3,** so that the passenger can have a good look at the foot area **S3.**

In subsequent step **#5,** the illuminations of the center-pillar lamp **E4**, seat-down-light lamp **E5,** and inner-handle lamp **E8** are started. Herein, the illumination of the center-pillar lamp **E4** can improve the passenger having a good look at the center pillar **6** constituting part of the contour of the ingress-egress opening **Hs**. The illumination of the seat-down-light lamp **E5** can improve the passenger having a good look at the seating face area **S5**. And, the illumination of the inner-handle lamp **E8** can improve the passenger having a good look at the inner handle **25.**

As described above, since the illuminations of the courtesy lamp **E1,** outer-handle lamp **E2**, foot lamp **E3,** center-pillar lamp **E4,** seat-down-light lamp **E5** and inner-handle lamp **E8** are started in the steps **#2-#5** according to the ingress action, the appropriate reception feeling can be provided to the passenger. Also, since the illuminations of the lamps **E1-E5, E8** improve the passenger having a good look at the respective portions, the facilities during the passenger's ingress can be improved. Further, since the illuminations of the console-down-light lamp **E6** and the room lamp **E7** are prohibited in the steps **#2-#5,** the upper body of the passenger is not illuminated, thereby protecting the passenger's privacy properly.

Next, in step **#6**, it is determined whether or not completion of the passenger's action of closing the slide door **20** is detected by the door-opening/closing state detector **82** within a specified time. This processing is executed in order to detect whether or not the passenger's ingress action is complete. When the completion of the closing action of the slide door 20 is detected in the step **#6,** it is determined that the passenger's ingress action is complete, and the control proceeds to step **#7**. When the completion of the closing action of the slide door **20** is not detected within the specified time in the step **#6**, it is determined that the passenger's ingress action is not complete. In step **#14,** the courtesy lamp **E1,** outer-handle lamp **E2**, foot lamp **E3**, center-pillar lamp **E4**, seat-down-light lamp **E5** and inner-handle lamp **E8** are controlled so as to be turned on and off (flash), and the control returns to the normal control. This control of the lamps **E1-E5,** E8 has an advantage of warning the passenger or other third party of incompletion of the ingress action. That is, it is warned the passenger that the closing of the slid door **20** is not complete yet or it is warned the third party that there occurs some emergency situation which causes incompletion of the ingress action of the passenger. The flashing of the lamps **E1-E5, E8** is cancelled by the complete closing of the slide door **20.**

In subsequent steps **#7-#11,** the lamps **E1-E5, E8** which have been turned on in the steps **#2-#5** are turned off in the same order as them being turned on. Specifically, the lamp turning off is executed in the order of the courtesy lamp **E1** (step **#7**), outer-handle lamp **E2** (step **#8**), foot lamp **E3** (step **#9**), center-pillar lamp E4 (step **#10**), seat-down-light lamp **E5** and inner-handle lamp **E8** (step **#11**). Thereby, the appropriate reception feeling to the passenger can be improved. Herein, the turning off of the lamps **E1-E5, E8** may be preferably conducted with afterglow, thereby further improving the appropriate reception feeling to the passenger.

In step **#12**, the console-down-light lamp **E6** is turned off, and the illumination prohibition of the room lamp **E7** is canceled, then the control returns to the normal control. Thus, by tuning on the console-down-light lamp **E6** in the step **#12** where the vehicle ingress is complete, the hand portion of the passenger seated in the second seat **12** can be illuminated in a relatively stable state. Further, since the illumination prohibition of the room lamp **E7** is cancelled, the vehicle compartment can be illuminated widely by the room lamp **E7** in the normal control.

### EMBODIMENT 2

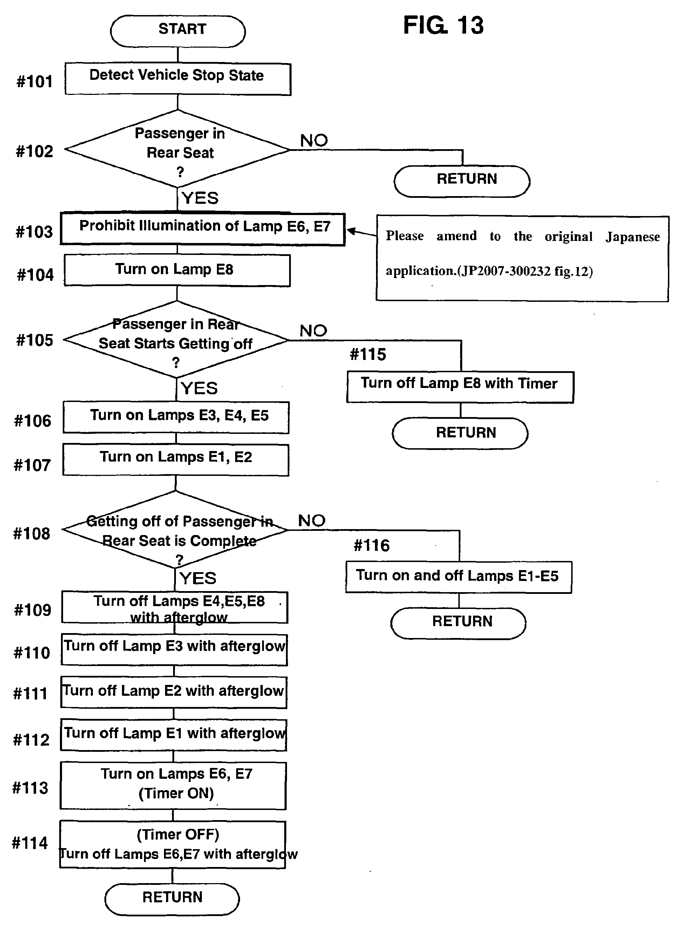

Hereinafter, another example of the control of the illumination system according to a second embodiment of the present invention will be described referring to FIG. **13**. This control shows an example of the control which is executed by the illumination controller **80** of the control unit CU in a case in which the passenger seated in the rear seat (the second seat **12** in the present embodiment) manually operates to open the slide door **20,** and then manually operates to close the slide door **20** after getting off the vehicle.

As shown in FIG. **13**, when the operation of the vehicle stop is detected (step **#101**), it is determined whether or not the passenger is seated in the rear seat (second seat **12**) in step **#102.** While the control in which the room lamp **E7** is turned off at the vehicle stop is well known, the room lamp **E7** of the present embodiment is configured not to be turned off until a specified timing after the vehicle stops.

The detection of the vehicle stop operation in the step **#101** is conducted by the vehicle stop detector **84**. This vehicle stop operation is detected by detecting a brake operation of the parking brake (not illustrated) with the parking-brake sensor **67** and/or a gear shift of the transmission (not illustrated) to the parking range with the gear-range sensor **68,** in addition to the detection of the vehicle speed 0 (zero) km/h with the speed sensor (vehicle speed sensor) **69.** The vehicle stop detector **84** corresponds to a vehicle-stop operation detector of the present invention. Further, the existence of the passenger in the second seat **12** in the step **#102** is detected by the passenger detector **81** based on the input signal from the second-seat sitting sensor **61**.

When the passenger is not seated in the second seat **12** (NO in the step **#102),** the control returns to the normal control. When the passenger is seated in the second seat **12** (YES in the step **#102**), the illuminations of the console-down-light lamp **E6** and the room lamp **E7** are prohibited in step **#103.** That is, if the lamps **E6**, **E7** are in a light-on state at this point, they are turned off and remain in their light-off state. Thereby, it is prevented that the upper body of the passenger is illuminated by the console-down-light lamp **E6** and the room lamp **E7** at the vehicle stop state.

Subsequently, the inner-handle lamp **E8** is turned on in step **#104.** Thereby, the inner handle **25** is illuminated, so that the passenger can have a good look at the inner handle **25**, thereby improving the facilities during the vehicle ingress of the passenger. In this case, since the illumination light is emitted substantially horizontally from the inner-handle lamp **E8** located below the beltline **Lb,** the upper body of the passenger is not illuminated.

In the next step **#105,** it is determined whether the passenger in the second seat **12** starts an egress action or not. This egress-action start is detected by the door operation detector **83** based on the input signal from the inner-handle operation sensor **65.** This door operation detector **83** corresponds to an egress-action detector of the present invention. When the passenger's egress action is not started (NO in the step **#105),** the inner-handle lamp **E8** is turned off with a timer (step **#115).** That is, in a case in which the opening operation of the inner handle **25** is not detected within a specified time which is set by the timer (not illustrated) and the specified time has passed without the detection, it may be considered that the passenger has no intent of the vehicle egress. Accordingly, the inner-handle lamp E8 is turned off and the control returns to the normal control.

Meanwhile, when the passenger's egress action start is determined (YES in the step **#105**), the foot lamp **E3**, center-pillar lamp **E4**, and seat-down-light lamp **E5** are turned on in step **#106,** and then the courtesy lamp **E1** and the outer-handle lamp **E2** are turned on in step **#107.**

As described above, when the start of the passenger's egress action is determined, the illuminations of the inner-handle lamp **E8,** foot lamp **E3**, center-pillar lamp **E4**, and seat-down-light lamp **E5,** which are a vehicle-inside lower illuminator which is configured to illuminate a lower-specified area in the vehicle compartment which is located below the beltline **Lb**, are started, and then the illuminations of the courtesy lamp **E1** and outer-handle lamp **E2,** which are a vehicle-outside lower illuminator which is configured to illuminate a lower-specified area outside the vehicle which is located below the beltline Lb, are started. Thereby, the respective illuminations of the inside and the outside of the vehicle by the lower illuminator can be properly executed according to the order of the egress action of the passenger who is getting off the vehicle, so that the appropriate reception feeling can be provided to the passenger.

In particular, during the passenger's egress, the inner handle **25** of the slide door **20** is illuminated by the inner-handle lamp **E8**, the vehicle-outside lower area near the ingress-egress opening Hs is illuminated by the foot lamp **E3** after the specified portion of the vehicle floor **4** in front of the second seat **12** is illuminated by the foot lamp **E3**, and the outer-handle of the slide door **20** is illuminated by the outer-handle lamp **E2**. That is, the passenger can be made have a good look at the foot area of the passenger getting off the vehicle and the operation member (inner and outer handle **25, 23** etc.), ensuring the appropriate reception feeling to the passenger. Thereby, the facilities during the passenger's egress and the like can be improved.

Herein, while the center-pillar lamp **E4** and the seat-down-light lamp **E5** are turned on together with the foot lamp **E3** after the start of the passenger's egress action (step **#105)** in the above-described control example, they may be turned on together with the inner-handle lamp **E8** before the detection of the egress-action start of the passenger.

After the execution of the step **#107,** it is determined whether the passenger's egress action from the second seat **12** is complete or not in step **#108.** The completion of the egress action is determined by the door operation detector 83 based on the input signal from the outer-handle operation sensor **64**. In a case in which the passenger's egress action is not complete within the specified time (NO in the step **#108**), it is considered that there may happen some abnormality. Accordingly, in step **#116,** the flashing action of the lamps **E1-E5** are conducted for warning, and then the control returns to the normal control. In a case in which the closing state of the slide door **21** is not detected by the door-opening/closing state detector **82** based on the input signal from the door position sensor **62** beyond a specified time even if the closing operation of the outer handle **23** is detected, it is considered that the door **20** may not be closed completely. Accordingly, in this case, the inner-handle lamp E8 may be controlled so as to be turned on and off (flash) in addition to the lamps **E1-E5,** thereby warning the passenger.

Meanwhile, in a case in which the completion of the passenger's egress action is determined (YES in the step **#108),** the center-pillar lamp **E4**, seat-down-light lamp **E5** and inner-handle lamp **E8** are turned off with afterglow in step **#109,** and then the foot lamp **E3**, outer-handle lamp **E2** and courtesy lamp **E1** are turned off with afterglow in order (steps **#110-#112).** This turning-off order is set to the order from the vehicle inside, like the turning-on order. Thereby, some smart feeling effects may be provided as the passenger gets off the vehicle and walks away from the vehicle. Herein, the turning off of the lamps **E1-E5, E8** may be preferably conducted with afterglow, thereby further improving the smart feeling effect.

After the courtesy lamp **E1** is turned off in the step **#112,** namely, the passenger gets out of the illumination areas of the vehicle-inside upper illumination lamps **E6, E7** for the vehicle egress, the console-down-light lamp E6 and the room lamp **E7** are turned off and the timer is turned on in step **#113.** By illuminating the seat face of the second seat **12** or the floor face with turning on the both lamps E6, **E7** at this timing, the passenger may be warned not to leave anything behind in the vehicle compartment. The timer is turned off after the timer-set time has elapsed, and accordingly the console-down-light lamp **E6** and the room lamp **E7** are turned off (step **#114).**

As described above, according to the present embodiment, when the vehicle stop sate is detected, the illuminations of the console-down-light lamp **E6** and the room lamp **E7** of the vehicle-inside upper illuminator, which is configured to illuminate the upper-specified area in the vehicle compartment which is located above the beltline **Lb,** are prohibited. And, the illuminations of the console-down-light lamp **E6** and the room lamp **E7** are not started until the passenger gets off the vehicle and gets out of these illumination areas. Accordingly, the upper body of the passenger is not illuminated during the vehicle stop and the passenger's egress, so that the passenger's privacy can be protected properly.

When the vehicle stop state is detected, the illuminations of the lower illumination lamps **E1-E5, E8** which are configured to illuminate the lower area which is located below the beltline **Lb** of the vehicle such that the passenger's upper body is not illuminated, are started. Thereby, the lower area below the beltline **Lb** is illuminated during the passenger's egress, so that the passenger can have a good look at the passenger's step and its surroundings without feeling any inconvenience during the passenger's egress or the like. Thus, the privacy of the passenger can be effectively protected as described above, ensuring the facilities during the passenger's egress.

The present invention should not be limited to the above-described embodiments, and any other modifications and improvements may be applied within the scope of the present invention, as defined by the appended claims.

## Claims

1. An illumination device for an ingress-egress opening **(Hs)** of a vehicle, particularly for an ingress-egress opening **(Hs)** of a slide door **(20)**, said illumination device comprising:
a plurality of illuminators **(E1-E5, E8; E6, E7)** operative to illuminate specified areas at and around the ingress-egress opening **(Hs)** including a lower illuminator **(E1-E5, E8)** which is configured to illuminate a lower area **(S1-S5, S8)** inside and/or outside the vehicle compartment and a vehicle-inside upper illuminator **(E6, E7)** which is configured to illuminate an upper-specified area **(S6)** inside the vehicle compartment, and
an illumination controller **(80)** operative to control illumination of the illuminators **(E1-E5, E8; E6, E7)**, said illumination controller **(80)** being configured to selectively prohibit illumination by the vehicle-inside upper illuminator **(E6, E7)** and start illumination by the lower illuminator **(E1-E5, E8).**

2. The illumination device for a vehicle **(1)** of claim 1, further comprising an ingress-action detector **(83)** to detect an action of ingress of a passenger through the ingress-egress opening (Hs), wherein said illumination controller (80) is configured to prohibit the illumination by the vehicle-inside upper illuminator **(E6, E7)** and start the illumination by the lower illuminator **(E1-E5, E8)** based on detection of the ingress action of the passenger by the ingress-action detector **(83).**

3. The illumination device for a vehicle **(1)** of claim 1 or 2, wherein said lower illuminator comprises a vehicle-inside lower illuminator **(E3, E4, E5, E8)** which is configured to illuminate a lower-specified area **(S3, S4, S5, S8)** inside the vehicle compartment which is located substantially below a beltline, and a vehicle-outside lower illuminator **(E1, E2)** which is configured to illuminate a lower-specified area **(S1, S2)** outside the vehicle **(1)** which is located substantially below the beltline **(Lb),** and said illumination controller **(80)** is configured to start illumination by the vehicle-inside lower illuminator **(E3, E4, E5, E8)** after starting illumination by the vehicle-outside lower illuminator **(E1, E2)** based on the detection of the ingress action by the ingress-action detector **(83).**

4. The illumination device for a vehicle **(1)** of claim 3, wherein said vehicle-outside lower illuminator comprises a vehicle-surrounding illuminator **(E1)** to illuminate a lower area **(S1)** outside the vehicle **(1)** near the ingress-egress opening (Hs) and an outer-handle illuminator **(E2)** to illuminate an outer handle **(23)** of the slide door **(20),** and said vehicle-inside lower illuminator comprises a foot illuminator **(E3)** to illuminate a vehicle floor **(4)** in front of a seat **(12)** and an inner-handle illuminator **(E8)** to illuminate an inner handle **(25)** of a slide door **(20).**

5. The illumination device for a vehicle **(1)** of claim 3 or 4, wherein said vehicle-inside lower illuminator comprises a pillar illuminator **(E4)** to illuminate an inside face of a pillar **(6)** which is provided so as to extend vertically along the ingress-egress opening **(Hs)** and/or a seat illuminator **(E5)** to illuminate a seat face of the seat **(12).**

6. The illumination device for a vehicle **(1)** of any one or more of the preceding claims, further comprising an ingress-completion detector **(82)** to detect completion of ingress of the passenger, wherein said illumination controller **(80)** is configured to start the illumination by the vehicle-inside upper illuminator **(E6, E7)** based on detection of ingress completion by the ingress-completion detector **(82).**

7. The illumination device for a vehicle **(1)** of any one or more of the preceding claims, wherein said plurality of illuminators comprise a plurality of said lower illuminators **(E1-E5, E8)**, and said illumination controller **(80)** is configured to start the illumination by the plural lower illuminators **(E1-E5, E8)** based on the detection of the ingress action by the ingress-action detector **(83)** in a specified order and/or disable the illumination by the plural lower illuminators **(E1-E5, E8)** based on the detection of the ingress completion by the ingress-completion detector **(82)** in the specified order.

8. The illumination device for a vehicle **(1)** of any one or more of the preceding claims, further comprising a vehicle-stop operation detector **(84)** to detect an operation for a vehicle stop of a driver and an egress-action detector **(83)** to detect an action of egress of the passenger through the ingress-egress opening **(Hs),** wherein said illumination controller **(80)** is configured to prohibit the illumination by the vehicle-inside upper illuminator **(E6, E7)** and start the illumination by the lower illuminator **(E1-E5, E8)** based on detection of the vehicle-stop operation by the vehicle-stop operation detector **(84)** and start the illumination by the vehicle-inside upper illuminator **(E6, E7)** when it is determined that the passenger gets out of an illumination area **(S6)** of the vehicle-inside upper illuminator **(E6, E7)** based on detection of the egress-action by the egress-action detector **(83).**

9. The illumination device for a vehicle **(1)** of any one or more of the preceding claims, wherein said lower illuminator comprises a vehicle-outside lower illuminator **(E1, E2)** which is configured to illuminate a lower-specified area **(S1, S2)** outside the vehicle **(1)** which is located substantially below the beltline **(Lb),** and a vehicle-inside lower illuminator **(E3, E4**, **E5, E8)** which is configured to illuminate a lower-specified area **(S3, S4**, **S5, S8**) inside the vehicle compartment which is located substantially below the beltline **(Lb),** and said illumination controller **(80)** is configured to start illumination by the vehicle-outside lower illuminator **(E1, E2)** after starting illumination by the vehicle-inside lower illuminator **(E3, E4, E5, E8)** based on the detection of the egress action by the egress-action detector (83).

10. The illumination device for a vehicle **(1)** of any one or more of the preceding claims, wherein said vehicle-outside lower illuminator comprises a vehicle-surrounding illuminator **(E1)** to illuminate a lower area **(S1)** outside the vehicle **(1)** near the ingress-egress opening (Hs) and an outer-handle illuminator **(E2)** to illuminate an outer handle **(23)** of the slide door **(20)**, and/or said vehicle-inside lower illuminator comprises a foot illuminator **(E3)** to illuminate a vehicle floor **(4)** in front of the seat **(12)** and an inner-handle illuminator **(E8)** to illuminate an inner handle **(25)** of the slide door **(20).**

11. The illumination device for a vehicle **(1)** of claim 10, wherein said vehicle-surrounding illuminator **(E1)** is provided at a specified location which is positioned outside and near a lower flange **(5f)** which is located inside and below a projecting portion **(31c)** which projects outward from a side sill **(5)** extending in a longitudinal direction of the vehicle **(1)** at an outer end of a vehicle floor **(4)**, the specified location at which the vehicle-surrounding illuminator **(E1)** is provided being positioned above a lower end of said lower flange **(5f).**

12. The illumination device for a vehicle **(1)** of any one of claims 1 through 11, wherein said lower illuminator **(E1-E5, E8)** is disposed substantially below the beltline **(Lb).**

13. Method of controlling an illumination device for an ingress-egress opening **(Hs)** of a vehicle, particularly for an ingress-egress opening **(Hs)** of a slide door **(20)**, said method comprising:
operating a plurality of illuminators **(E1-E5, E8; E6, E7)** to illuminate specified areas at and around the ingress-egress opening (**Hs**) including a lower illuminator **(E1-E5, E8)** which is configured to illuminate a lower area **(S1-S5, S8)** inside and/or outside the vehicle compartment and a vehicle-inside upper illuminator **(E6, E7)** which is configured to illuminate an upper-specified area **(S6)** inside the vehicle compartment, and
controlling illumination of the illuminators **(E1-E5, E8; E6, E7)** in such a manner to selectively prohibit illumination by the vehicle-inside upper illuminator **(E6, E7)** and start illumination by the lower illuminator **(E1-E5, E8).**

14. The method of controlling an illumination device according to claim 13, further comprising the step of detecting an action of ingress of a passenger through the ingress-egress opening **(Hs)**, wherein the illumination by the vehicle-inside upper illuminator **(E6, E7)** is prohibited and the illumination by the lower illuminator **(E1-E5, E8)** is started based on detection of the ingress action of the passenger by an ingress-action detector **(83).**

15. The method of controlling an illumination device of any one or more of the preceding claims 13 to 14, further comprising the steps of detecting completion of ingress of the passenger, and starting the illumination by the vehicle-inside upper illuminator **(E6, E7)** based on detection of ingress completion by an ingress-completion detector **(82).**
